**Europäisches Patentamt**

**European Patent Office**

**Office européen des brevets**

(11) Veröffentlichungsnummer: **0 236 885 B1**

(12) **EUROPÄISCHE PATENTSCHRIFT**

(45) Veröffentlichungstag der Patentschrift: **03.06.92**

(51) Int. Cl.5: **H02B 13/02**, H01H 33/02

(21) Anmeldenummer: **87102881.7**

(22) Anmeldetag: **28.02.87**

(54) **Druckgas-isolierter, dreiphasiger gekapselter Hochspannungs-Leistungsschalter.**

(30) Priorität: **14.03.86 DE 3608548**

(43) Veröffentlichungstag der Anmeldung:
**16.09.87 Patentblatt 87/38**

(45) Bekanntmachung des Hinweises auf die
Patenterteilung:
**03.06.92 Patentblatt 92/23**

(84) Benannte Vertragsstaaten:
**CH DE FR LI SE**

(56) Entgegenhaltungen:
**EP-A- 0 012 708**
**EP-A- 0 077 547**
**DE-B- 1 490 027**

(73) Patentinhaber: **BBC Brown Boveri AG**
**Haselstrasse**
**CH-5401 Baden(CH)**

(72) Erfinder: **Wagenbach, Wolfgang, Dipl.-Ing.**
**Rhönstrasse 10**
**W-6484 Birstein(DE)**
Erfinder: **Neumaier, Heinrich, Ing. grad.**
**Fahrstrasse 4**
**W-6450 Hanau 1(DE)**
Erfinder: **Probst, Heinrich, Ing. grad.**
**Waldstrasse 9**
**W-8752 Blankenbach(DE)**
Erfinder: **Peitz, Theo, Ing. grad.**
**Mittlere Maingasse 9**
**W-6450 Hanau 9(DE)**
Erfinder: **Westbrock, Paul, Dipl.-Ing.**
**Goethestrasse 1**
**W-6947 Laudenbach(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**W-6800 Mannheim 1(DE)**

## Beschreibung

Die Erfindung betrifft einen druckgas-isolierten, mindestens einphasig gekapselten elektrischen Leistungsschalter, insbesondere für Mittel- und Hochspannung, gemäß dem Oberbegriff des Anspruches 1. (Siehe EP-A-00 77 547 und EP-A-00 12 708).

Dreiphasig gekapselte Leistungsschalter besitzen ein rohrförmiges Gehäuse innerhalb dem parallel zu dessen Längsachse die drei Pole eines Leistungsschalters angeordnet sind; die Stromzuführung liegt an einem Ende des Gehäuses, d.h. auf einer Seite der Kontaktstelle, wogegen die Stromabführung am anderen Ende des Gehäuses, d.h. auf der anderen Seite der Kontaktstelle angeordnet ist. Dabei kann die Zuordnung von Stromzuführung und Stromabführung zu den Leistungsschalterpolen eine U-Form oder eine Z-Form bilden.

Aufgabe der Erfindung ist es, einen Leistungsschalter der eingangs genannten Art zu schaffen, der im Zuge der Stromleitungführungen weniger Platz benötigt.

Diese Aufgabe wird erfindungsgemäß gelöst durch die kennzeichnenden Merkmale des Anspruches 1.

Die Erfindung kann angewendet werden bei ein- oder mehrpolig bzw. -phasig gekapselten Leistungsschaltern, deren Pole in einem metall- oder isolierstoffgekapselten Gehäuse untergebracht sind. Besonders vorteilhaft ist die Erfindung anwendbar bei dreiphasig gekapselten Hochspannungsleistungsschaltern, da dort die besonderen Vorteile am besten erkennbar sind.

Bei solchen dreiphasig gekapselten Leistungsschaltern also befinden sich innerhalb des Kapselungsgehäuses drei erfindungsgemäß angenähert U-förmige Stromleitungsführungen mit insgesamt sechs parallel zu der Mittelachse des Kapselungsgehäuses verlaufenden, die Schenkel bildenden Leiterteilen, von denen jeweils drei die Leistungsschalterpole und die anderen drei die entsprechenden Zusatzleiter bilden. Auf diese Weise wird erreicht, daß die Stromzuführung in das Gehäuse hinein und die Stromabführung aus dem Gehäuse heraus immer im wesentlichen im Bereich eines Endes des Gehäuses bzw. auf einer Seite der durch die Kontaktstellen der Leistungsschalterpole aufgespannten Ebene liegen und bei einer bevorzugten Anordnung miteinander fluchten, wobei das Gehäuse selbst eine im wesentlichen T-förmige Gestalt besitzt.

Weitere vorteilhafte Ausgestaltungen der Erfindung sind den Unteransprüchen zu entnehmen.

Die erfindungsgemäße Ausgestaltung kann verwendet werden, wenn die Leistungsschalterpole in einer Ebene nebeneinander oder an den Spitzen eines Dreiecks liegen. In jedem Falle befinden sich die Stromzu- bzw. abführungsleiter bzw. -stellen bevorzugt am oberen Ende des Leistungsschaltergehäuses.

Anhand der Zeichnung, in der einige Ausführungsbeispiele der Erfindung dargestellt sind, soll die Erfindung näher erläutert und beschrieben werden.

Es zeigt:

Fig. 1 eine schematische, perspektivische Darstellung der erfindungsgemäßen Anordnung,

Fig. 2 den Einbau der erfindungsgemäßen Ausführung gemäß Figur 1 in ein Querkupplungsfeld,

Fig. 3 den Leistungsschalter gemäß Figur 1 in einem Längskupplungsfeld,

Fig. 4 eine detaillierte Ausgestaltung der Erfindung, Aufsicht von oben,

Fig. 5 eine Schnittansicht gemäß der Schnittlinie A-A der Figur 4 und

Fig. 6 eine Schnittansicht gemäß der Schnittlinie B-B der Figur 4.

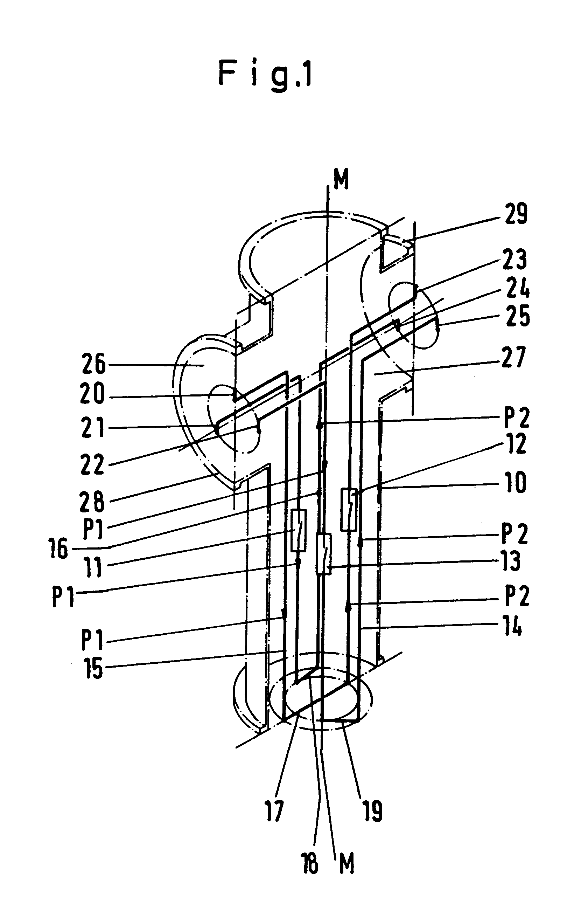

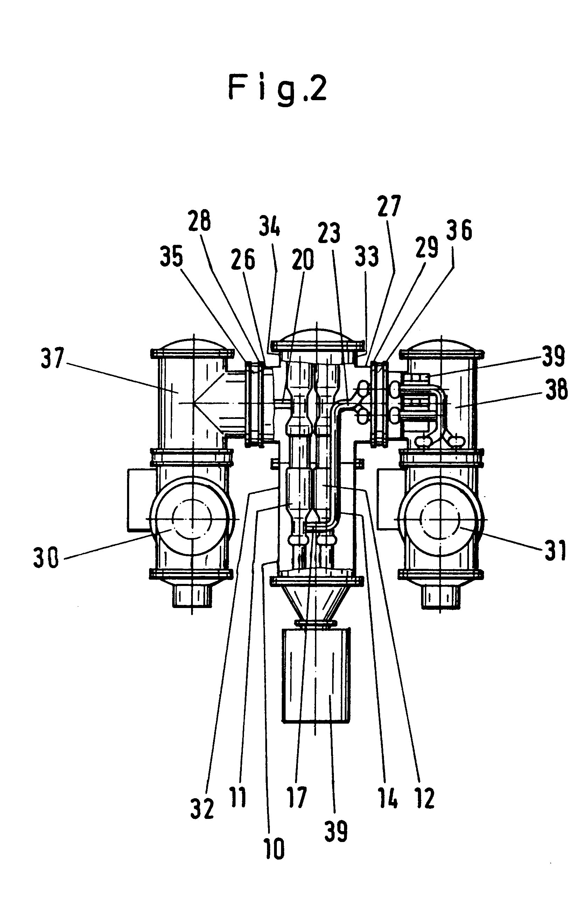

Es sei nun Bezug genommen auf die Figur 1. Innerhalb eines strichliert dargestellten rohrförmigen Gehäuses 10 sind drei an den Ecken eines Dreiecks angeordnete parallel zur Längsachse M-M des Gehäuses 10 verlaufende Leistungsschalterpole 11, 12 und 13 untergebracht. Zwischen den Leistungsschalterpolen 11, 12, und 13, ebenfalls auf den Spitzen eines Dreiecks, das jedoch gegenüber dem Dreieck der Leistungsschalterpole 11, 12, 13 verdreht ist, verlaufen parallel zu den Leistungsschalterpolen 11, 12 und 13 Zusatzleiter 14, 15 und 16, die mit den zugehörigen Leistungsschalterpolen 11, 12 und 13 am in der Zeichnung unten liegenden Boden des Gehäuses 10 über Leitungsstege 17, 18 und 19 verbunden sind. Am oberen Ende des Gehäuses 10 schließen sich an die Leistungsschalterpole 11, 12 und 13 bzw. die Zusatzleiter 14, 15 und 16 Stromzuführungsleitungen 20, 21 und 22 bzw. Stromabführungsleitungen 23, 24 und 25 an, die durch je eine Öffnung 26 bzw. 27 im Gehäuse 10 quer zur Längsmittelachse M-M aus dem Gehäuse 10 herausgeführt sind und von Kapselungsrohren 26 und 27 umfaßt sind, die zusammen mit dem Gehäuse 10 eine T-Form bilden. Die Stromzuführungs- bzw. abführungsleitungen 20, 21, 22 bzw. 23, 24, 25 liegen ähnlich wie die Leistungsschalterpole an den Spitzen eines Dreickes, können aber auch, wie in Figur 2 angedeutet, in einer Ebene liegen, aus der sie über L-förmige Zwischenstücke (nicht beziffert) auf an die Stromzu- bzw. -abführungsleitungen anschließenden Rohrgasschienen umgelenkt werden, deren Phasenleiter dann normalerweise im Dreieck angeordnet sind. Am Ende der Kapselungsrohre 26 und 27 befinden sich Anschlußflansche 28 und 29 (siehe weiter unten). Die Stromführung bspw. durch den Leistungsschalterpol 11 geschieht wie folgt: durch die Stromzuführungsleitung 21 fließt der Strom in Pfeilrichtung $P_1$ nach unten und durch den Zusatzleiter 16 nach oben zum Stromabführungsleiter 24. Durch den Leistungsschalterpol 12 fließt der Strom wie folgt: über die Zuführungsleitung 20 fließt der Strom gemäß Pfeilrichtung $P_1$ in dem Zusatzleiter 15 nach unten und durch den Leistungsschalterpol 12 gemäß Pfeilrichtung $P_2$ nach oben. Die Stromrichtung durch den Leistungsschalterpol 13 verläuft gemäß Pfeilrichtung $P_1$ ebenfalls nach unten, wogegen der Strom durch den Zusatzleiter 16 in Pfeilrichtung $P_2$ nach oben fließt. Auf diese Weise fließt der Strom im Leistungsschalterpol 11 und 13 nach unten und in den Leistungsschalterpolen 12 nach oben.

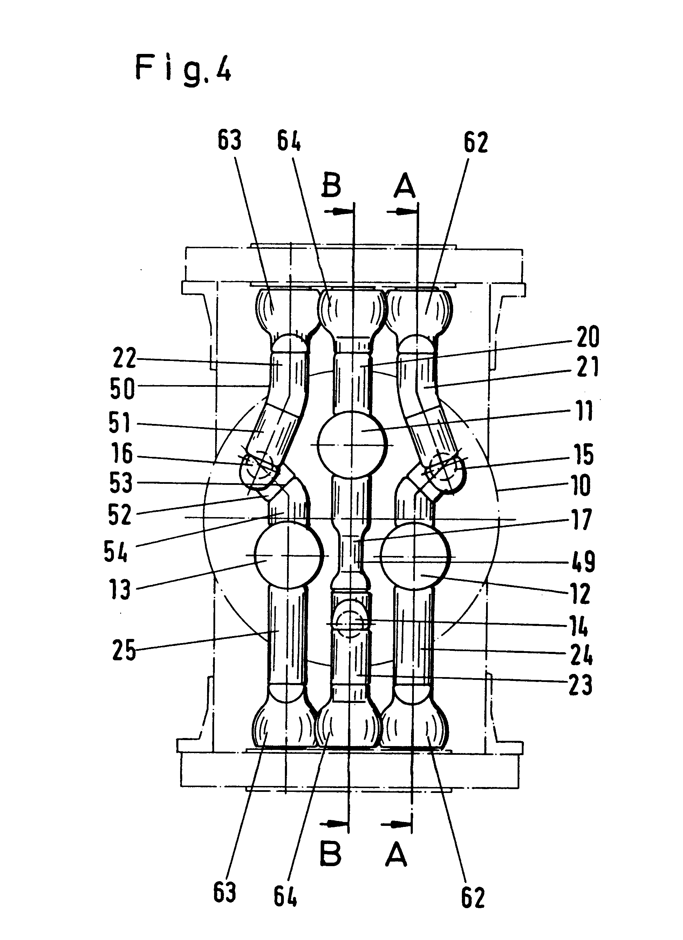

Die Figur 2 zeigt einen Einbau der des in Figur 1 lediglich schematisch dargestellten Leistungsschalters in ein Querkupplungsfeld zwischen zwei Sammelschienenanordnungen 30 und 31. Das Gehäuse 10 ist aus zwei Gehäuseteilen 32 und 33 zusammengesetzt, von denen das untere Gehäuseteil 32 rohrförmig ist, wogegen das obere Gehäuseteil 33 eine Kreuzform besitzt mit einem Abschnitt 34, dessen Mittelachse mit dem Gehäuseteil 32 auf einer Linie liegt, und mit einem quer dazu verlaufenden Abschnitt 35, an dem die beiden Kapselungsrohre 26 und 27 angeordnet sind. Im Inneren des Gehäuses 10 erkennt man den Leistungsschalterpol 11, den Leitungssteg 17 und die Zusatzleitung 14; der Pol 13 ist nicht sichtbar, da durch den Pol 12 verdeckt. Am oberen Ende des Leistungsschalterpoles 11 befindet sich die Stromzuführung 20 und die Stromabführung 23. Die Stromzuführungsleitungen 20, 21 und 22 und die Stromabführungsleitungen 23, 24 und 25 liegen bei der Ausführung nach Figur 2 jeweils in einer Ebene, aus der heraus mittel L-förmiger Anschlußstükke (ohne Bezugsziffer) diese drei Stromzuführungs- bzw. Abführungsableitungen auf die Ecken eines Dreiecks umgeleitet werden. Diese Konstruktion ist an sich bekannt (siehe auch Figuren 4 bis 6). An den Kapselungsrohren 26 und 27 schließen die Flansche 28 und 29 an und unter Zwischenfügung von Schottisolatoren 35 und 36 schließen sich weitere Kapselungsteile 37 und 38 an, die zur Umleitung der Stromführungsleitungen nach unten zur Sammelschiene 30 bzw. 31 dienen. In den beiden Kapselungsteilen 37 und 38 können Trennschalter und Stromwandler 39 untergebracht sein, wie aus Figur 2 ersichtlich ist, um die Durchführung eines Querkupplungsvorganges zwischen zwei Sammelschinensystemen zu bewerkstelligen. Daß unterhalb des Gehäuses 10 ein Antrieb 39 und oberhalb des Gehäuses 10 ein Spannungswandler 40 angeordnet sind, ist für die Erfindung von geringerer Bedeutung. Demgemäß wird hier nicht näher darauf eingegangen.

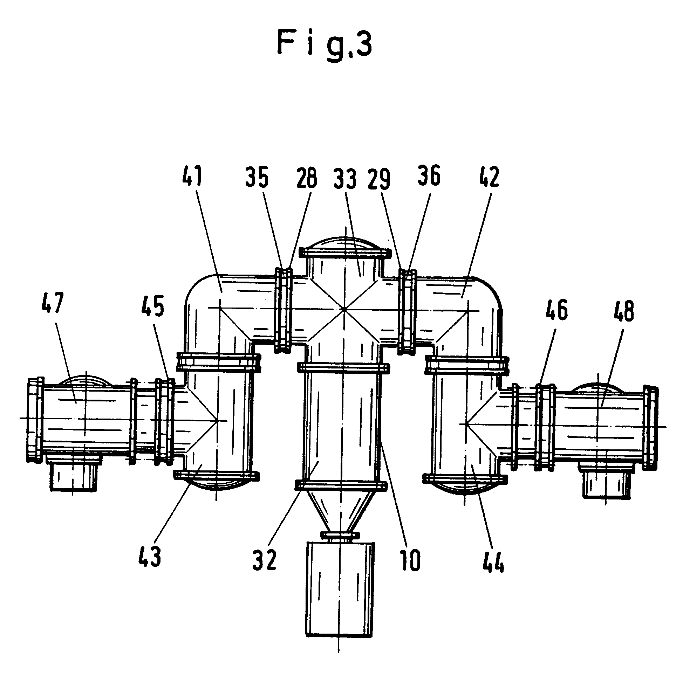

In der Figur 3 ist dargestellt, wie der Leistungsschalter gemäß Figur 1 in einem Sammelschienenstrang untergebracht ist. Man erkennt wieder das Gehäuse 10, das sich aus den beiden Gehäuseteilen 32 und 33 zusammensetzt. An die beiden Flansche 28 und 29 sind unter Zwischenfügung der Schottungsisolatoren 35 und 36 L-förmig abgebogene Kapselungteile 41 und 42 angeschlossen, die an einem T-förmigen Gehäuse 43 bzw. 44 anschließen, an deren einem Flansch 45 bzw. 46 jeweils der linke Sammelschienenstrang 47 und der rechte Sammelschienenstrang 48 anschließen; die beiden Sammelschienenstränge 47 und 48 fluchten hierbei miteinander.

Das eigentliche, aus den beiden Kapselungsteilen 32 und 33 gebildete Gehäuse 10 besitzt eine Kreuz- bzw. eine T-Form, wobei im Steg des T die Leistungsschalterpole zusammen mit den Zusatzleitern und in dem Quersteg die Stromzu- bzw. -abführungsleitungen untergebracht sind.

Es sei nun Bezug genommen auf die Fugur 4, in der in detaillierter Ausfertigung eine Aufsicht auf den Leistungsschalter im Inneren des nur strichliert dargestellten Gehäuses 10 erkennbar ist. Die Leistungsschalterpole 11, 12 und 13 befinden sich jeweils an den Spitzen eines Dreiecks. Zum Leistungsschalterpol 11 führt die Zuleitung 20 und am unteren Ende des Leistungsschalterpols ist Steg 17 sichtbar, der im Bereich zwischen den beiden Leistungsschalterpolen 12 und 13 einen Abschnitt 49 eingeschnürten Querschnittes aufweist, damit dort die Isolierabstände gewährleistet sind. Die Zusatzleitung 14 ist von oben verdeckt und zwar von dem Stromabführungsleiter 23. Der Stromzuführungsleiter 22 besitzt ein winkliges Teilstück 50, an das ein Verbindungsstück 51 anschließt, das mit dem ebenfalls wieder verdeckt gezeichneten Zusatzleiter 16 verbunden ist. An den Zusatzleiter 16 schließt sich ein unter einem Winkel zu der Stromzuführungsleitung 22 verlaufendes Anschlußstück 52 an, das an einer Schrägfläche 53 eines dem Anschlußstück 50 entsprechenden weiteren Anschlußstückes 54 elektrisch angeschlossen ist. Das andere Ende dieses Anschlußstückes 54 ist mit dem unteren Ende des Leistungsschalterpoles 13 verbunden. Am oberen Ende des Leistungsschalterpoles 13 schließt sich dann der Stromabführungsleiter 25 an. Aufgrund des Winkelstücks 50 und der winkligen Schrägfläche 53 mit den Einzelteilen 51 und 52 befindet sich der Zusatzleiter 16 außerhalb der Verbindungslinien des Zuführungsleiters 22 und dem Abführungsleiter 25; auf diese Weise ist der Isolierabstand der beiden Leiterabschnitte 50, 51 sowie der beiden Abschnitte 52 und 54 von dem Leistungsschalterpol 11 gewährleistet; mit anderen Worten: der Leistungsschalterpol 11 wird von dem Zuführungsleiterzug bis zum senkrecht verlaufenden Zusatzleiter 16 und von dort bis zum Leistungsschalterpol 13 in elektrisch ausreichendem Abstand umfahren.

In gleicher Weise ist auch der Zusatzleiter 15 außerhalb der Verbindungslinien der Stromzuführungs- bzw. Stromabführungsleiter 20/24 angeordnet und die zu ihm hinführenden Verbindungsstücke entsprechen identisch den Verbindungs- bzw. Anschlußstücken 50, 51, 52 und 54. Sie liegen dabei symmetrisch zu der Mittellinie, die in der Ebene der Schnittlinie B-B liegt.

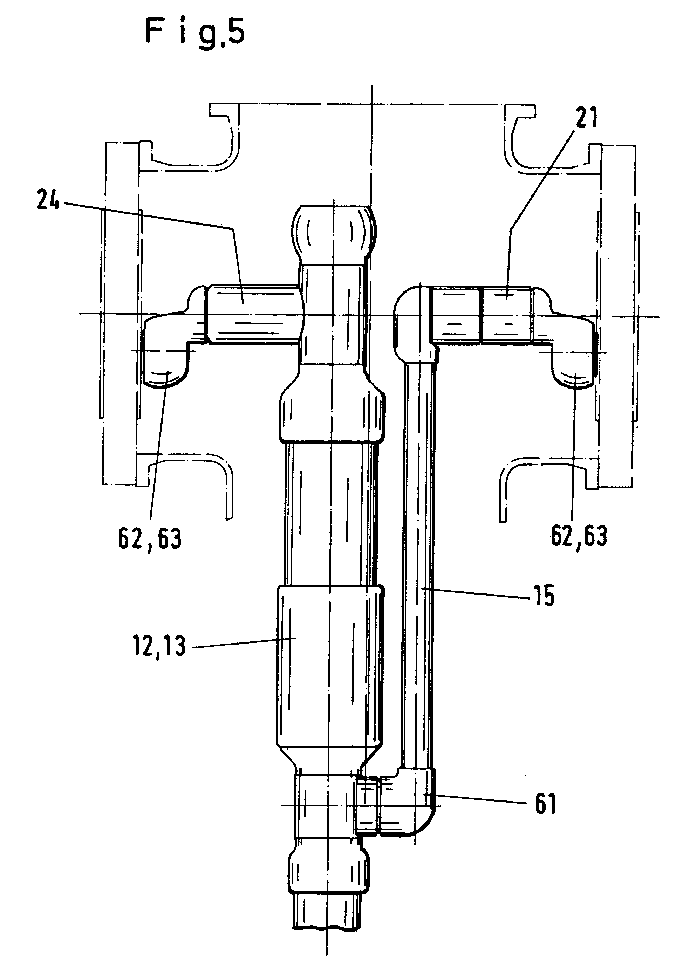

Die Figur 5 zeigt eine Schnittansicht gemäß der Schnittlinie A-A der Figur 4. Der Zusatzleiter der Figur 15 ist als rohrförmiger Leiter ausgebildet, der über ein Winkelstück 60 mit seinem oberen Ende am Zuführungsleiter 20 und mit einem weiteren Winkelstück 61 am unteren Ende des Leistungsschalters angeschlossen ist. Das obere Ende des Leistungsschalterpols 12 verläuft über den Stromabführungsleiter 24 hin zu einem nach unten abgewinkelten L-förmigen Anschlußstück zum Anschluß eines links davon weiterlaufenden Phasenleiters. In entsprechender Weise ist am Leistungsschalterpol 13 ein dem Winkelstück 62 identisch entsprechendes Winkelstück 63 angeschlossen; mit dem Leistungsschalterpol 11 und dem zugehörigen Zusatzleiter 14 ist ein nach oben abgewinkeltes L-förmiges Verbindungsstück 64 verbunden, so daß mit den L-förmigen Verbindungsstücken 62, 63 und 64 die Stromabführungsleiter 25, 23 und 24, die in einer Ebene liegen, umgelenkt werden auf die ebenfalls auf einem Dreieck liegenden Phasenleiter. Auf der gegenüberliegenden Seite sind gleiche bzw. identische L-förmige Verbindungsstücke vorgesehen.

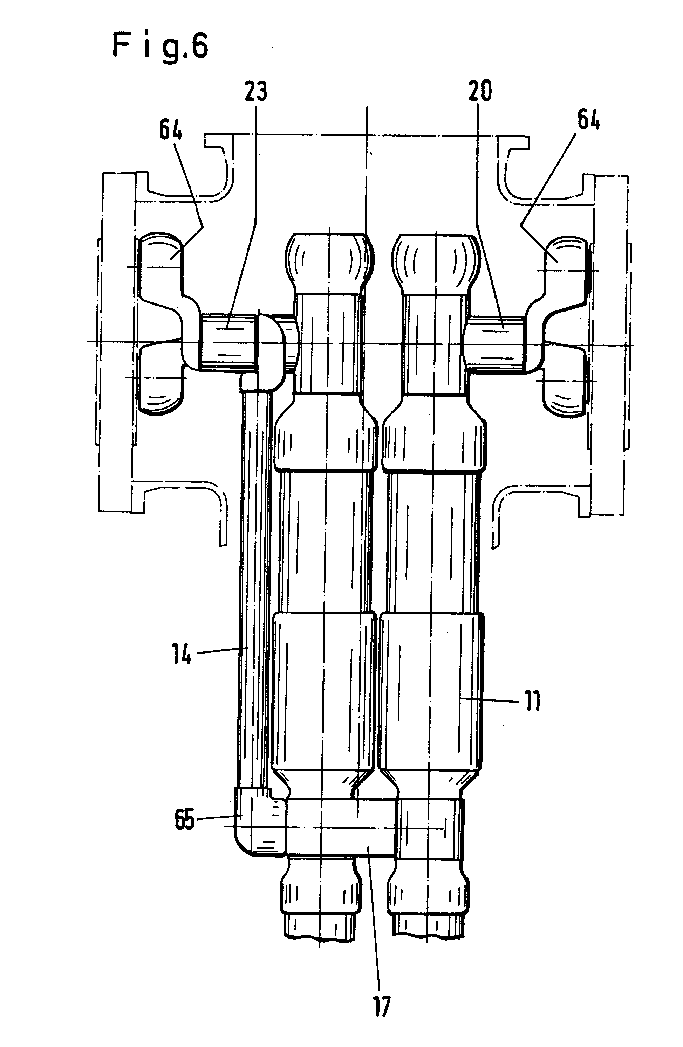

Die Figur 6 zeigt eine Schnittansicht gemäß Linie B-B der Figur 4. Man erkennt hierbei den Stromabführungsleiter 23 und das daran angeschlossene L-förmige Verbindungsstück 64, den Zusatzleiter 14, das Leiterteilstück in Form des Steges 17, das über ein Verbindungsleiterteilstück 65 mit dem unteren Ende des Zusatzleiters 14 verbunden ist; der daran angeschlossene Leistungsschalterpol besitzt die Bezugsziffer 11, der an seinem oberen Ende über ein Stromzuführungsleiterteilstück 20 mit dem entsprechenden Anschlußstück 64 verbunden ist.

In obigen Ausführungen liegen die Stromzu- bzw. -abführungsleiter oberhalb der Kontakstellen der Leistungsschalterpole. Natürlich können sie auch unterliegen. Sie können, wie dargestellt, diametral sich gegenüberliegen, oder auch jeden Winkel zwischen sich einnehmen, z.B. 90°.

## Patentansprüche

1.  Druckgas-isolierter, insbesondere SF$_6$-Gas isolierter, mindestens einphasig gekapselter, insbesondere metallgekapselter Leistungsschalter für Hoch- und Mittelspannung, mit je einer Stromzu- bzw. abführungsleitung (20, 21, 22; 23, 24, 25) zu jedem Leistungsschalterpol (11, 12, 13) hin und von diesem weg, <u>dadurch gekennzeichnet</u>, daß im Inneren des Kapselungsgehäuses (10) je ein einem Leistungsschalterpol (11, 12, 13) zugeordneter und parallel dazu verlaufender Zusatzleiter (14, 15, 16) vorgesehen, der sich mit den zugehörigen Leistungsschalterpol zu einer U-Form ergänzt, dergestalt daß die Zu- bzw. Abführungsleitungen zu jedem Leistungsschalterpol hin bzw. von diesem weg am gleichen Ende des angenähert rohrförmigen Kapselungsgehäuses (10) angeordnet sind.

2.  Leistungsschalter nach Anspruch 1, bei dem die Leistungsschalterpole (11, 12, 13) an den Ecken eines Dreiecks angeordnet sind, dadurch gekennzeichnet, daß jeweils der einem Leistungsschalterpol (11, 12, 13) zugeordnete Zusatzleiter (14, 15, 16) zwischen den anderen Leistungsschalterpolen liegt.

3.  Leistungsschalter nach Anspruch 2, dadurch gekennzeichnet, daß die Stromzuführ- bzw. abführleitungen (20, 21, 22; 23, 24, 25) in einer Ebene liegen.

4.  Leistungsschalter nach einem der vorigen Ansprüche, dadurch gekennzeichnet, daß die Zusatzleiter (14, 15, 16) mit den Schalterpolen (11, 12, 13) je ein U- bilden, dessen U-Steg (17, 18, 19) an dem der Zu- bzw. Ableitungsstelle entgegengesetzt liegenden Ende des rohrförmigen Kapselunggehäuses (10) angeordnet ist.

## Claims

1.  Pressurised gas-insulated, especially SF$_6$ gas-insulated, encapsulated, especially metal-encapsulated power circuit breaker for at least one phase, for high and medium voltage, having in each case one current inlet and outlet line (20, 21, 22; 23, 24, 25) to and from each power circuit breaker terminal (11, 12, 13), characterised in that, in the interior of the encapsulating housing (10) there is provided in each case one additional conductor (14, 15, 16), which is allocated to a power circuit breaker terminal (11, 12, 13), runs parallel thereto and is supplemented by the associated power circuit breaker terminal to form a U-shape, in such a manner that the inlet and outlet lines to and from each power circuit breaker terminal are arranged at the same end of the approximately tubular encapsulating housing (10).

**2.** Power circuit breaker according to Claim 1, in which the power circuit breaker terminals (11, 12, 13) are arranged at the corners of a triangle, characterised in that the additional conductor (14, 15, 16) allocated in each case to a power circuit breaker terminal (11, 12, 13) is located between the other power circuit breaker terminals.

**3.** Power circuit breaker according to Claim 2, characterised in that the current inlet and outlet lines (20, 21, 22; 23, 24, 25) are located in one plane.

**4.** Power circuit breaker according to one of the preceding claims, characterised in that the additional conductors (14, 15, 16) together with the circuit breaker terminals (11, 12, 13) in each case form a U-shape, whose U-web (17, 18, 19) is arranged on the end of the tubular encapsulating housing (10) located opposite the inlet and outlet point.

**Revendications**

**1.** Disjoncteur de puissance blindé, en particulier à blindage métallique, avec au moins une phase, isolé par gaz sous pression, en particulier par gaz, pour haute et moyenne tension comportant une ligne d'arrivée et une ligne de départ de courant (20, 21, 22, 23, 24, 25) qui mène et part de chaque pôle de disjoncteur (11, 12, 13), caractérisé en ce qu'il est prévu à l'intérieur de l'enveloppe de blindage (10) à chaque fois un conducteur supplémentaire (14, 15, 16) qui est associé à un pôle de disjoncteur (11, 12, 13) et est parallèle à celui-ci, lequel conducteur supplémentaire forme un U avec le pôle de disjoncteur associé de manière telle que les lignes d'arrivée et de départ menant à et partant de chaque pôle sont disposées à la même extrémité de l'enveloppe de blindage (10) sensiblement tubulaire.

**2.** Disjoncteur de puissance selon la revendication 1 dans lequel les pôles de disjoncteur (11, 12, 13) sont disposés aux sommets d'un triangle, caractérisé en ce que le conducteur supplémentaire (14, 15, 16) associé à un pôle de disjoncteur (11, 12, 13) est disposé entre les autres pôles de disjoncteur.

**3.** Disjoncteur de puissance selon la revendication 2, caractérisé en ce que les lignes d'arrivée et de départ de courant (20, 21, 22, 23, 24, 25) sont situées dans un plan.

**4.** Disjoncteur de puissance selon l'une des revendications précédentes, caractérisé en ce que les conducteurs supplémentaires (14, 15, 16) forment avec les pôles de disjoncteur (11, 12, 13) chaque fois un U dont la barre (17, 18, 19) est située à l'extrémité de l'enveloppe de blindage (10) opposée au point d'arrivée ou de départ.

# F i g.1

# Fig.2

# Fig.3

# Fig.4

# F i g.5

# Fig.6